# EUROPEAN PATENT APPLICATION

(11) **EP 4 080 655 A1**
(43) Date of publication of application: **26.10.2022**
(21) Application number: 21869756.3
(22) Date of filing: 16.09.2021
(51) Int. Cl.: H01M 50/166, H01M 50/153, H01M 50/172, H01M 50/183, H01M 50/155, H01M 50/531

(54) **BUTTON TYPE SECONDARY BATTERY**

(30) Priority: 16.09.2020 KR 20200119499; 15.09.2021 KR 20210123504
(71) Applicant: LG Energy Solution, Ltd., Seoul 07335 (KR)
(72) Inventor: LIM, Jae Won, Daejeon 34122 (KR); LEE, Yong Gon, Daejeon 34122 (KR); LEE, Je Jun, Daejeon 34122 (KR); MIN, Geon Woo, Daejeon 34122 (KR); CHO, Min Su, Daejeon 34122 (KR); KIM, Min Gyu, Daejeon 34122 (KR); KIM, Hak Kyun, Daejeon 34122 (KR)
(74) Representative: Hoffmann Eitle
(86) International application number: PCT/KR2021/012722
(87) International publication number: WO 2022/060134

(57) **Abstract**

The present invention relates to a button-type secondary battery comprising: an electrode assembly provided with a first electrode tab and a second electrode tab; a lower can provided with an accommodation part, in which the electrode assembly is accommodated and to which the first electrode tab is connected, and a flange part provided on an outer circumferential surface of the accommodation part; an upper cap installed on the accommodation part to cover the accommodation part and a curl part provided on an outer circumferential surface of the cover part; a terminal member coupled to the upper cap and connected to the second electrode tab; and an insulating member configured to insulate the terminal member and the upper cap from each other and seal a gap between the terminal member and the upper cap, wherein the flange part and the curl part are coupled to each other in a seaming manner to seal a gap between the lower can and the upper cap.

## Description

### CROSS-REFERENCE TO RELATED APPLICATION

The present application claims the benefit of the priority of Korean Patent Application Nos. 10-2020-0119499, filed on September 16, 2020, and 10-2021-0123504, filed on September 15, 2021, which are hereby incorporated by reference in their entirety.

### TECHNICAL FIELD

The present invention relates to a button-type secondary battery having improved coupling properties by bonding a lower can and an upper cap to each other in a seaming manner.

### BACKGROUND ART

In general, secondary batteries refer to chargeable and dischargeable, unlike primary batteries that are not chargeable. The secondary batteries are being widely used for mobile phones, notebook computers, and camcorders, electric vehicles, and the like.

The secondary battery comprises a button-type secondary battery having a high energy density, a high output, and a long lifespan. The button-type secondary battery comprises an electrode assembly, a lower can accommodating the electrode assembly, an upper can coupled to the lower can, and a gasket insulating the lower can and the upper can from each other and sealing a gap between the lower can and the upper can.

Here, the lower can and the upper cap are coupled through interference fitting or welding.

However, in the button-type secondary battery, when the gasket is damaged, or a welding defect occurs when the lower can and the upper cap are coupled to each other, there may be problems in coupling property and sealing force between the lower can and the upper cap, and thus, there may be a problem in that leakage of an electrolyte occurs.

### DISCLOSURE OF THE INVENTION

### TECHNICAL PROBLEM

An object of the present invention is to provide a button-type secondary battery, in which a lower can and an upper can are bonded to each other in a seaming manner to improve coupling force and sealing force between the lower can and the upper cap without a gasket or welding.

### TECHNICAL SOLUTION

A button-type secondary battery according to the present invention for achieving the above object comprises: an electrode assembly provided with a first electrode tab and a second electrode tab; a lower can provided with an accommodation part, in which the electrode assembly is accommodated and to which the first electrode tab is connected, and a flange part provided on an outer circumferential surface of the accommodation part; an upper cap installed on the accommodation part to cover the accommodation part and a curl part provided on an outer circumferential surface of the cover part; a terminal member coupled to the upper cap and connected to the second electrode tab; and an insulating member configured to insulate the terminal member and the upper cap from each other and seal a gap between the terminal member and the upper cap, wherein the flange part and the curl part are coupled to each other in a seaming manner to seal a gap between the lower can and the upper cap.

The button-type secondary battery may comprises: an electrode assembly provided with a first electrode tab and a second electrode tab; a lower can provided with an accommodation part, in which the electrode assembly is accommodated and to which the first electrode tab is connected, and a curl part provided on an outer circumferential surface of the accommodation part; an upper cap installed on the accommodation part to cover the accommodation part and a flange part provided on an outer circumferential surface of the cover part; a terminal member coupled to the upper cap and connected to the second electrode tab; and an insulating member configured to insulate the terminal member and the upper cap from each other and seal a gap between the terminal member and the upper cap, wherein the flange part and the curl part may be coupled to each other in a seaming manner to seal a gap between the lower can and the upper cap.

The flange part may have a thickness less than that of the accommodation part, and the curl part may have a thickness less than that of the cover part.

The flange part may have a thickness less than that of the cover part, and the curl part may have a thickness less than that of the accommodation part.

The flange part may be provided with a first flange provided on the outer circumferential surface of the accommodation part and a second flange provided to be bent from an end of the first flange toward a bottom surface of the accommodation part, and the curl part may be provided with a first curl surface provided on the outer circumferential surface of the cover part and supported on the first flange part, a second curl surface provided on an end of the first curl surface and supported on an outer circumferential surface of the second flange, and a third curl surface provided on an end of the second curl surface and inserted between the accommodation part and the second flange.

The flange part may be provided with a first flange provided on the outer circumferential surface of the cover part and a second flange provided to be bent from an end of the first flange toward a bottom surface of the accommodation part, and the curl part may be provided with a first curl surface provided on the outer circumferential surface of the accommodation part and supported on the first flange part, a second curl surface provided on an end of the first curl surface and supported on an outer circumferential surface of the second flange, and a third curl surface provided on an end of the second curl surface and inserted between the cover part and the second flange.

The second flange may have a thickness that gradually increases toward an end thereof.

The third curl surface may have a thickness that gradually increases toward an end thereof.

An inner surface of the second flange facing the third curl surface may be formed as a first inclined surface that gradually increases in thickness toward an end thereof, and an outer surface of the third curl surface facing the second flange may be formed as a second inclined surface that is in surface close contact with the first inclined surface.

A sealing member for increasing in sealing force may be provided at a bonded portion between the flange part and the curl part.

The terminal member may comprise a terminal part to which the second electrode tab of the electrode assembly is coupled while being inserted into a through-hole of the upper cap and a support part having a diameter greater than that of the through-hole of the cover surface and supported on a top surface of the cover cap.

An uneven part for increasing in coupling force between the accommodation part and the cover part may be formed between the accommodation part and the cover part, and the uneven part may be formed on an outer circumferential surface of the cover part facing the accommodation part.

An insulating tape may be attached to each of the first electrode tab and the second electrode tab.

### ADVANTAGEOUS EFFECTS

The button-type secondary battery according to the present invention may comprise the electrode assembly, the lower can, the upper cap, the terminal member, the insulating member, and the seaming part. The seaming part may comprise the flange part provided in the lower can and the curl part provided in the upper cap, and the flange part and the curl part may be coupled to each other in the seaming manner. Due to these features, it is possible to improve the coupling force and sealing force between the lower can and the upper cap without the gasket or welding.

### BRIEF DESCRIPTION OF THE DRAWINGS

FIG. 1 is an assembly perspective view of a button-type secondary battery according to a first embodiment of the present invention.
FIG. 2 is an exploded perspective view of the button-type secondary battery according to the first embodiment of the present invention.
FIG. 3 is a cross-sectional view of FIG. 1.
FIG. 4 is a partial enlarged view of FIG. 3.
FIG. 5 is a cross-sectional view of a button-type secondary battery according to a second embodiment of the present invention.
FIG. 6 is a cross-sectional view of a button-type secondary battery according to a third embodiment of the present invention.
FIG. 7 is a cross-sectional view of a button-type secondary battery according to a fourth embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Button-type secondary battery according to first embodiment of the present invention]

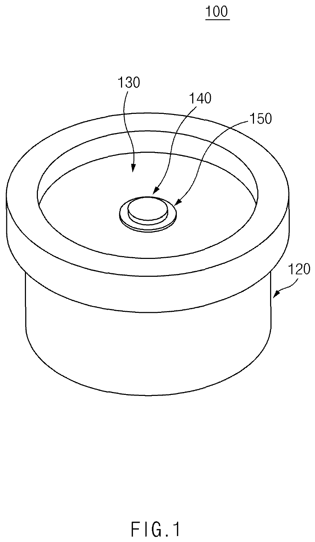

As illustrated in FIGS. 1 to 4, a button-type secondary battery 100 according to a first embodiment of the present invention is a secondary battery, of which a diameter is greater than a height, and comprises an electrode assembly 110, a lower can 120 accommodating the electrode assembly 110, an upper cap 130 coupled to the lower can 120, a terminal member 140 inserted into the upper cap 130, an insulating member 150 insulating the terminal member 140 from the upper cap 130, and a seaming part that bonds the lower can 120 to the upper cap 130 in a seaming manner.

### Electrode assembly

The electrode assembly 110 has a structure in which a first electrode and a second electrode are alternately stacked with a separator therebetween. A first electrode tab 111 is connected to the first electrode, and a second electrode tab 112 is connected to the second electrode.

The first electrode is a negative electrode, and the second electrode is a positive electrode. Thus, the first electrode tab 111 is a negative electrode tab, and the second electrode tab 112 is a positive electrode tab.

### Lower can

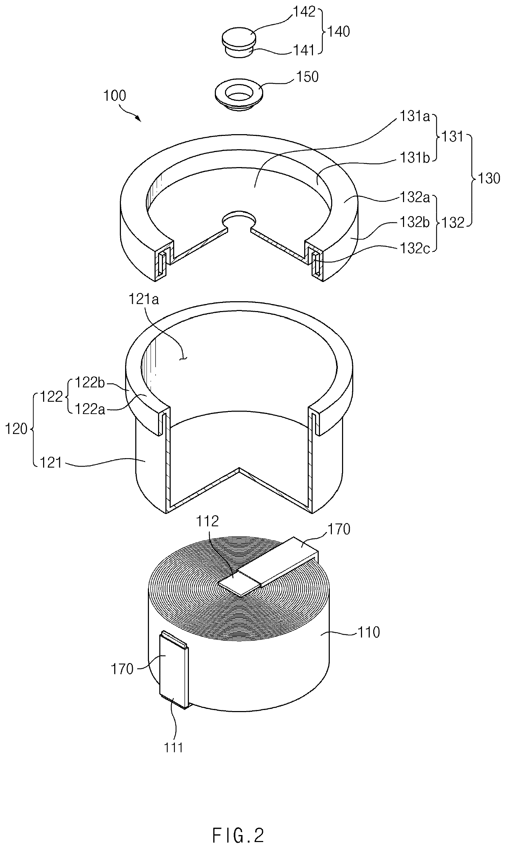

The lower can 120 is configured to accommodate the electrode assembly and comprises an accommodation part 121 in which an accommodation groove 121a accommodating the electrode assembly 110 is formed in a top surface when viewed in FIG. 2, and the first electrode tab 111 of the electrode assembly 110 is coupled to a bottom surface of the accommodation groove 121a.

### Upper cap

The upper cap 130 is configured to cover the accommodation groove and comprises a cover part 131 that covers the accommodation groove while being inserted into the accommodation groove of the lower can 120.

In addition, the cover part 131 comprises a cover surface 131a inserted into the accommodation groove 121a of the accommodation part 121 to cover the accommodation groove 121a and a support surface 131b provided on an edge of the cover surface 131a and supported on an inner surface of the accommodation groove 121a.

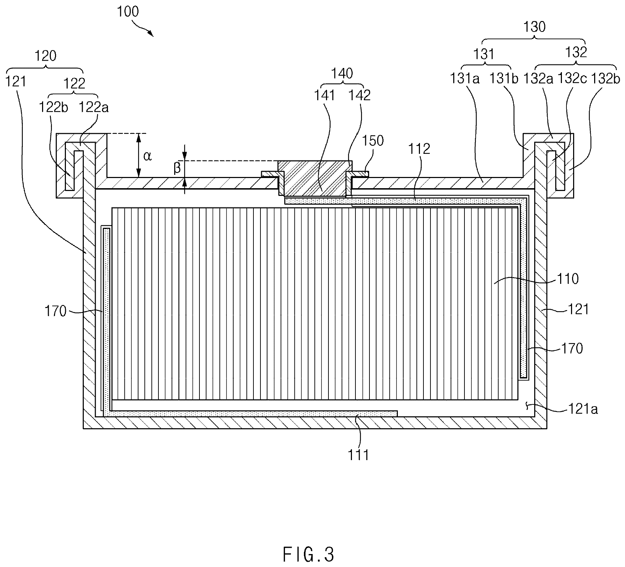

Here, when viewed in FIG. 3, the support surface 131b of the upper cap 130 and an upper end of the accommodation groove 121a of the lower can 120 are disposed on the same horizontal line. Thus, it is possible to prevent a height difference and gap between the upper cap 130 and the lower can 120 from occurring.

In addition, a position of the cover surface 131a inserted into the accommodation groove 121a is determined according to a height of the support surface 131b. That is, if the height of the support surface 131b increases, the cover surface 131a may be inserted to be close to the electrode assembly 110 accommodated in the accommodation groove 121a. Thus, a space between the cover part 131 and the electrode assembly 110 may be minimized, and as a result, a moving phenomenon of the electrode assembly 110 may be significantly prevented. If the height of the support surface 131b is formed to be small, the cover part 131 may be inserted in a state that is away from the electrode assembly 110 accommodated in the accommodation groove 121a. Thus, the space between the cover part 131 and the electrode assembly 110 may greatly increase, and as a result, space utilization may be improved.

### Terminal member

The terminal member 140 is inserted into a through-hole formed in the cover part 131 and has a structure in which the second electrode tab 112 of the electrode assembly 110 is coupled.

That is, the terminal member 140 comprises a terminal part 141 to which the second electrode tab 112 of the electrode assembly 110 is coupled in a state of being inserted the through-hole of the cover surface 131a downward from the top, and a support part 142 having a diameter greater than that of the through-hole of the cover surface 131a and supported on the top surface of the cover surface 131a.

In the present invention, although it has been described that the terminal member 140 has a "T" cross-sectional shape when viewed in FIG. 2, it may be formed in a " 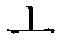 "-shaped cross-section or an "H"-shaped cross-section depending on the application.

A height β of the support part 142 is lower than a height α of the support surface 131b of the upper cap 130. Thus, it is possible to prevent the terminal member 140 from protruding out of the upper cap 130, and as a result, it is possible to prevent the terminal member from being damaged and broken.

### Insulating member

The insulating member 150 is used to insulate the terminal member and the upper cap from each other. That is, the insulating member 150 comprises a lower insulating part provided between the terminal part 141 and the through-hole of the cover surface 131a to insulate the terminal part 141 and the through-hole from each other and an upper insulating part provided between the support part 142 and the cover surface 131a to insulate the support part 142 and the cover surface 131a from each other.

In the button-type secondary battery 100 according to the first embodiment of the present invention, the lower can 120 and the upper cap 130 have a structure in which the lower can 120 and the upper cap 130 are coupled to each other in a seaming manner. That is, the button-type secondary battery 100 according to the first embodiment of the present invention comprises a seaming part that couples the lower can 120 to the upper cap 130 in the seaming manner. Thus, the coupling force and sealing force between the lower can 120 and the upper cap 130 may be improved without a gasket or welding.

The seaming refers to a joint operation in which two components are folded, bent, rolled, or glued together. For example, ends of the lower cap 120 and the upper cap 130, which are in close contact with each other, may be rolled or bent in a roll shape. Thus, the ends of the lower cap 120 and the upper cap 130, which are in close contact with each other, may be coupled to be sealed.

Hereinafter, the seaming part, which is a technical feature of the present invention, will be described in more detail.

### Seaming part

The seaming part is provided with a flange part 122 provided on an outer circumferential surface of the accommodation part 121 of the lower can 120 and a curl part 132 provided on the outer circumferential surface of the cover part 131.

In the seaming part having such a structure, the flange part 122 and the curl part 132 are coupled to each other in the seaming manner, and thus, the lower can 120 and the upper cap 130 may be sealed therebetween.

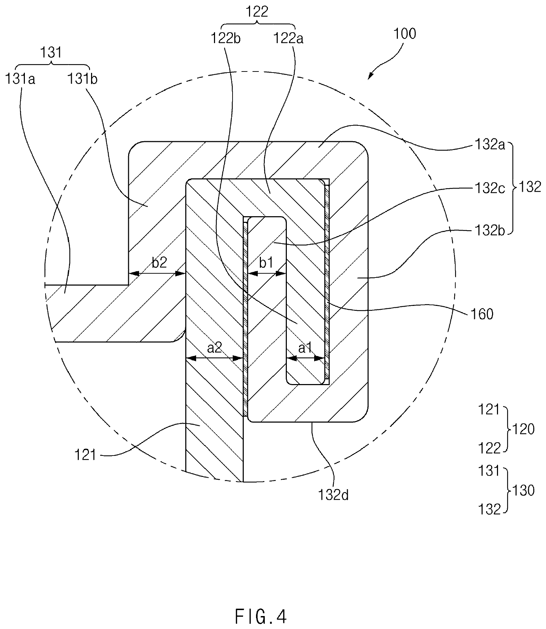

As a first example, referring to FIG. 4, the seaming part is provided with the flange part 122 provided on an outer circumferential surface of an upper end of the accommodation part 121 and the curl part 132 provided on an outer circumferential surface of an upper end of the cover part 131.

Also, the flange part 122 comprises a first flange 122a provided on an outer circumferential surface of the accommodation part 121 and a second flange 122b bent from an end of the first flange 122a toward a bottom surface (in a downward direction when viewed in FIG. 4) of the accommodation part 121. That is, the first flange 122a and the second flange 122b have a 'L'-shaped cross-section when viewed in FIG. 4.

Also, the curl part 132 is provided with a first curl surface 132a provided on the outer circumferential surface of the accommodation part 121 and supported on the first flange part 122a, a second curl surface 132b provided on an end of the first curl surface 132a and supported on an outer circumferential surface of the second flange 122b, and a third curl surface 132c provided on an end of the second curl surface 132b and inserted between the first and second flanges 122a and 122b.

The flange part 122 and the curl part 132 having such the structure may be coupled to each other in the seaming manner to greatly increase in pressing force, adhesion, and sealing force between the lower can 120 and the upper cap 130. As a result, the sealing force between the lower can 120 and the upper cap 130 may increase without the gasket or welding.

Here, a thickness a1 of the flange part 122 is less than a thickness a2 of the accommodation part 121. That is, when the thickness a2 of the accommodation part 121 is provided to be 0.15t, the thickness a1 of the flange part 122 is provided to be 0.10t.

In addition, a thickness b1 of the curl part 132 is less than a thickness b2 of the cover part 131. That is, when the thickness of the cover part 131 is 0.15t, the thickness a1 of the curl part 132 is 0.10t.

The flange part 122 and the curl part 132 have the same thickness. The accommodation part 121 and the cover part 131 have the same thickness.

Thus, since each of the flange part 122 and the curl part 132 is thinner than each of the accommodation part and the cover part, when the flange part 122 and the curl part 132 are coupled to each other in the seaming manner, the flange part 122 and the curl part 132 may be easily deformed to be bonded to each other. Particularly, when the flange part 122 and the curl part 12 are coupled to each other, the accommodation part 121 and the cover part 131 may be prevented from being deformed together.

A connection portion between the second curl surface 132b and the third curl surface 132c is formed as a horizontal surface 132d, and the horizontal surface 132d is provided to be in contact with the outer circumferential surface of the accommodation part 121. Thus, it is possible to prevent a gap from being formed between the horizontal surface and the accommodation part, and as a result, it is possible to prevent foreign substances from being introduced between the horizontal surface and the accommodation part.

A sealing member 160 for increasing in sealing force may be further provided at a coupling portion between the flange part 122 and the curl part 132. For example, the sealing member 160 is provided between the outer circumferential surface of the accommodation part 121 and the third curl surface 132c and between the second flange 122b and the second curl surface 132b. Thus, the sealing force between the flange part 122 and the curl part 132 may greatly increase. The sealing member may be made of a conductive material. For example, the sealing member may be made of a high-temperature silicone resin. Thus, current may be induced to flow stably from the lower can 120 to the upper cap 130.

Here, the sealing member 160 may be formed as a plurality of coating surfaces, each of which has a closed curve shape, and the plurality of coating surfaces may be disposed at the bonded portion of the flange part and the curl part so as to be spaced regular intervals from each other.

Referring to FIG. 4, a lower end of the seaming part is disposed lower than a bottom surface of the cover part 131 inserted into the lower can 120 when viewed with respect to the upper cap 130.

That is, since a length of the seaming part may be sufficiently secured, a large contact area between the seaming part and the lower can 120 may be secured, and as a result, deformation such as the bending of the seaming part in a direction of the upper cap may be prevented.

An insulating tape 170 for improving insulation is attached to the first electrode tab 111 and the second electrode tab 112. Thus, it is possible to stably insulate the first electrode tab 111 from the second electrode provided in the electrode assembly and insulate the second electrode tab 112 from the first electrode provided in the electrode assembly.

Therefore, in the button-type secondary battery 100 according to the first embodiment of the present invention, since the flange part provided in the lower can and the curl part provided in the upper cap may be coupled to each other in the seaming manner, the gap between the lower can and the upper cap may be sealed without the gasket or welding. Particularly, since each of the flange part and the curl part is provided to be thinner than each of the accommodation part of the lower can and the cover part of the upper cap, the flange part and the curl part may be easily seamed to be bonded to each other, thereby preventing the accommodation part and the cover part from being deformed.

Hereinafter, in descriptions of another embodiment of the present invention, constituents of the second embodiment having the same function as the first embodiment have been given the same reference numeral in the drawings, and thus duplicated description will be omitted.

### [Button-type secondary battery according to second embodiment of the present invention]

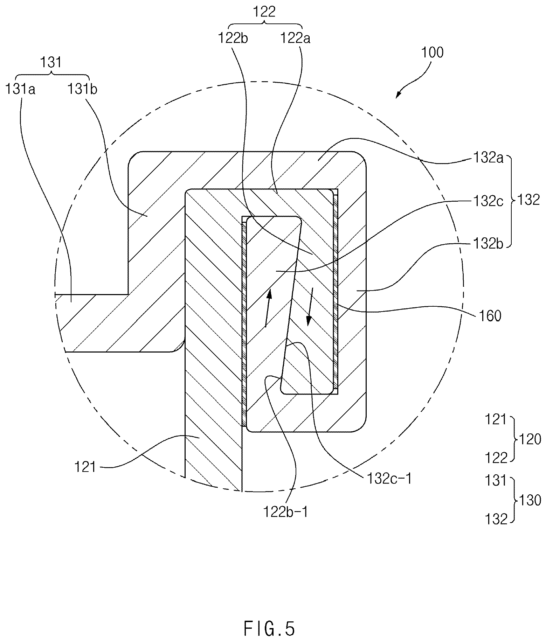

As illustrated in FIG. 5, a button-type secondary battery 100 according to a second embodiment of the present invention comprises a seaming part that bonds a lower can 120 to an upper cap 130 in a seaming manner.

The seaming part is provided with a flange part 122 provided on an outer circumferential surface of the accommodation part 121 provided in the lower can 120 and a curl part 132 provided on an outer circumferential surface of the cover part 131 provided in an upper cap 130. Here, the flange part 122 and the curl part 132 are coupled to each other in the seaming manner to seal the gap between the lower can and the upper cap.

Also, the flange part 122 comprises a first flange 122a provided on the outer circumferential surface of the accommodation part 121 and a second flange 122b bent from an end of the first flange 122a toward a bottom surface (in a downward direction when viewed in FIG. 4) of the accommodation part 121.

Also, the curl part 132 is provided with a first curl surface 132a provided on the outer circumferential surface of the accommodation part 121 and supported on the first flange part 122a, a second curl surface 132b provided on an end of the first curl surface 132a and supported on an outer circumferential surface of the second flange 122b, and a third curl surface 132c provided on an end of the second curl surface 132b and inserted between the accommodation part 121 and the second flanges 132b.

Here, a thickness of the second flange 122b gradually increases toward the end. That is, the end of the second flange 122b is thicker than the remaining portion of the second flange. In addition, the third curl surface 132c is provided to gradually increase in thickness toward the end. That is, the end of the third curl surface 132c is thicker than the remaining portion of the third curl surface.

Thus, as illustrated in FIG. 5, when the flange part 122 and the curl part 132 are coupled to each other in the seaming manner, an end of the second flange and an end of the third curl surface may overlap each other in an opposite direction. Here, each of the end of the second flange and the end of the third curl surface may have a thick thickness to increase in coupling force, and thus, the problem, in which the flange part and the curl part are separated from each other, may be prevented from occurring.

Particularly, an inner surface (a left surface of the second flange in FIG. 5) of the second flange 122b facing the third curl surface 132c is formed as a first inclined surface 122b-1 of which a thickness gradually increases toward the end, and an outer surface (a right surface of the third curl surface in FIG. 5) of the third curl surface 132c facing the second flange 122b is in surface close contact with the first inclined surface 122b-1 to form a second inclined surface 132c-1. Thus, when the end of the second flange and the end of the third curl surface overlap each other in the opposite directions, the first inclined surface 122b-1 and the second inclined surface 132c-1 are in surface close contact with each other, and thus, coupling force between the end of the second flange and the end of the third curl surface may increase.

In addition, the end of the second flange 122b and the end of the third curl surface 132c may be guided by the first and second inclined surfaces 122b-1 and 132c-1 in directions, which are opposite to each other (when viewed in FIG. 5, the end of the second flange is directed in a downward direction, and the third curl surface is directed in an upward direction), and thus, the coupling force between the end of the second flange 122b and the end of the third curl surface 132c may increase. That is, since the end of the second flange 122b and the end of the third curl surface 132c move in an arrow direction illustrated in FIG. 5, the coupling force between the end of the second flange 122b and the end of the third curl surface 132c may increase

Therefore, in the button-type secondary battery 100 according to the second embodiment of the present invention, the coupling force between the lower can and the upper cap may greatly increase.

### [Button-type secondary battery according to third embodiment of the present invention]

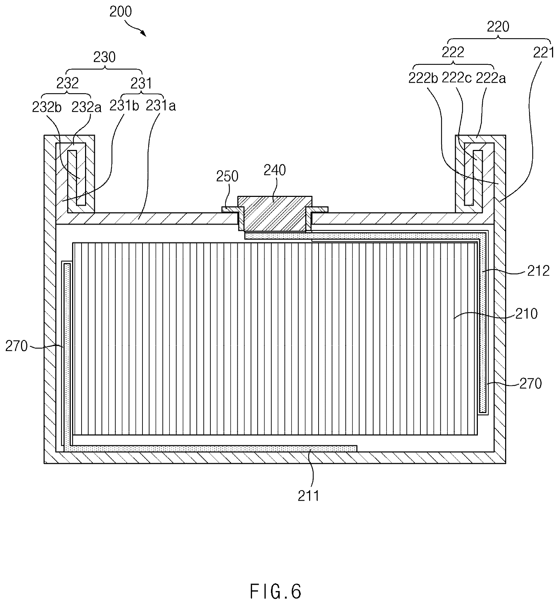

As illustrated in FIG. 6, a button-type secondary battery 200 according to a third embodiment of the present invention comprises an electrode assembly 210 provided with a first electrode tab 211 and a second electrode tab 212, an accommodation part 221, in which the electrode assembly 210 is accommodated, and to which the first electrode tab 211 is connected, a lower can 220 provided as a curl part 222 provided on an outer circumferential surface of the accommodation part 221, a cover part 231 installed on the accommodation part 221 to cover the accommodation part 221, an upper cap 230 provided as a flange part 232 provided on an outer circumferential surface of the cover part 231, a terminal member 240 coupled to the upper cap 230 and connected to the second electrode tab 212, an insulating member 250 insulating the terminal member 240 and the upper cap 230 from each other and sealing a gap between the terminal member 240 and the upper cap 230, and an insulating tape 270 insulating the first electrode tab 211 and the second electrode tab 212 from each other.

The electrode assembly, the terminal member, the insulating member, and the insulating tape have the same configuration as the electrode assembly, the terminal member, the insulating member, and the insulating tape, which are described in the first embodiment, and thus duplicated descriptions will be omitted.

The cover part 231 comprises a cover surface 231a that covers the accommodation part 221 and a support surface 231b supported on an inner surface of the accommodation part 221.

Here, the flange part 232 and the curl part 222 may be coupled to each other in a seaming manner to increase in sealing force between the lower can 220 and the upper cap 230.

That is, the flange part 232 is provided with a first flange 232a provided on the outer circumferential surface of the cover part 231 and a second flange 232b bent from an end of the first flange 232a toward a bottom surface of the accommodation part 221.

Also, the curl part 222 is provided with a first curl surface 222a provided on the outer circumferential surface of the accommodation part 221 and supported on the first flange part 232a, a second curl surface 222b provided on an end of the first curl surface 222a and supported on an outer circumferential surface of the second flange 232b, and a third curl surface 222c provided on an end of the second curl surface 222b and inserted between the cover part 231 and the second flange 232b.

Thus, the lower can 220 and the upper cap 230 are coupled to each other while the flange part 232 and the curl part 222 are seamed in a direction of the inside of the button-type secondary battery, that is, in an upward direction of the cover part. As a result, the sealing force between the lower can 220 and the upper cap 230 may increase.

A thickness of the flange part 232 is smaller than a thickness of the cover part 231, and a thickness of the curl part 222 is smaller than a thickness of the accommodation part 221. Thus, the flange part and the curl part may be easily deformed for the seaming.

The thickness of the second flange 232b is provided to gradually increase toward the end, and the thickness of the third curl surface 222c is provided to gradually increase toward the end. Thus, it is possible to increase in coupling force between the flange part and the curl part.

An inner surface of the second flange 232b facing the third curl surface 222c is formed as a first inclined surface of which a thickness gradually increases toward the end, and an outer surface of the third curl surface facing the second flange is formed as a second inclined surface that is in surface close contact with the first inclined surface. Thus, the coupling force may increase when the flange part and the curl part are coupled to each other in the seaming manner.

Therefore, in the button-type secondary battery 200 according to the third embodiment of the present invention, the flange part and the curl part may be coupled to each other in the seaming manner in the direction toward the inside of the secondary battery.

### [Button-type secondary battery according to fourth embodiment of the present invention]

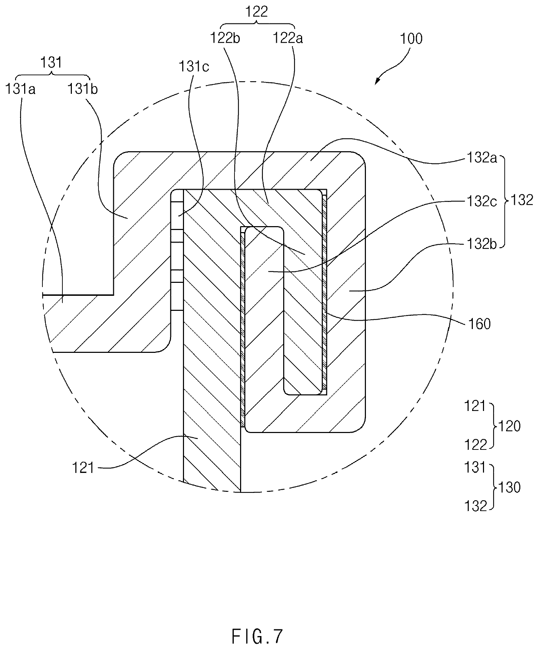

As illustrated in FIG. 7, a button-type secondary battery 100 according to a fourth embodiment of the present invention comprises a lower can 120 and an upper cap 130, and the lower can 120 is provided with an accommodation part 121 in which the electrode assembly 110 is accommodated and to which a first electrode tab 111 is connected, and a flange part 122 provided on an outer circumferential surface of the accommodation part 121. In addition, the upper cap 130 is provided with a cover part 131 installed on the accommodation part 121 to cover the accommodation part 121, and a curl part 132 provided on an outer circumferential surface of the cover part 131.

Here, an uneven part 131c for increasing in coupling force is formed between the accommodation part 121 and the cover part 131, and the uneven part 131c is formed on an outer circumferential surface of the cover part facing the accommodation part and has a closed curve shape of which both ends are connected to each other.

Therefore, the button-type secondary battery 100 according to the fourth embodiment of the present invention comprises the uneven part to increasing in bonding force between the lower can 120 and the upper cap 130.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

110: Electrode assembly
111: First electrode tab
112: Second electrode tab
120: Lower can
121: Accommodation part
121a: Accommodation groove
122: Flange part
122a: First flange
122b: Second flange
130: Upper cap
131: Cover part
131a: Cover surface
131b: Support surface
131c: Uneven part
132: Curl part
132a: First curl surface
132b: Second curl surface
132c: Third curl surface
132d: Horizontal surface
140: Terminal member
141: Terminal part
142: Support part
150: Insulating member
160: Sealing member
170: Insulating tape

## Claims

1. A button-type secondary battery comprising:
an electrode assembly provided with a first electrode tab and a second electrode tab;
a lower can provided with an accommodation part, in which the electrode assembly is accommodated and to which the first electrode tab is connected, and a flange part provided on an outer circumferential surface of the accommodation part;
an upper cap installed on the accommodation part to cover the accommodation part and a curl part provided on an outer circumferential surface of the cover part;
a terminal member coupled to the upper cap and connected to the second electrode tab; and
an insulating member configured to insulate the terminal member and the upper cap from each other and seal a gap between the terminal member and the upper cap,
wherein the flange part and the curl part are coupled to each other in a seaming manner to seal a gap between the lower can and the upper cap.

2. A button-type secondary battery comprising:
an electrode assembly provided with a first electrode tab and a second electrode tab;
a lower can provided with an accommodation part, in which the electrode assembly is accommodated and to which the first electrode tab is connected, and a curl part provided on an outer circumferential surface of the accommodation part;
an upper cap installed on the accommodation part to cover the accommodation part and a flange part provided on an outer circumferential surface of the cover part;
a terminal member coupled to the upper cap and connected to the second electrode tab; and
an insulating member configured to insulate the terminal member and the upper cap from each other and seal a gap between the terminal member and the upper cap,
wherein the flange part and the curl part are coupled to each other in a seaming manner to seal a gap between the lower can and the upper cap.

3. The button-type secondary battery of claim 1, wherein the flange part has a thickness less than that of the accommodation part, and
the curl part has a thickness less than that of the cover part.

4. The button-type secondary battery of claim 2, wherein the flange part has a thickness less than that of the cover part, and
the curl part has a thickness less than that of the accommodation part.

5. The button-type secondary battery of claim 1, wherein the flange part is provided with a first flange provided on the outer circumferential surface of the accommodation part and a second flange provided to be bent from an end of the first flange toward a bottom surface of the accommodation part, and
the curl part is provided with a first curl surface provided on the outer circumferential surface of the cover part and supported on the first flange part, a second curl surface provided on an end of the first curl surface and supported on an outer circumferential surface of the second flange, and a third curl surface provided on an end of the second curl surface and inserted between the accommodation part and the second flange.

6. The button-type secondary battery of claim 2, wherein the flange part is provided with a first flange provided on the outer circumferential surface of the cover part and a second flange provided to be bent from an end of the first flange toward a bottom surface of the accommodation part, and
the curl part is provided with a first curl surface provided on the outer circumferential surface of the accommodation part and supported on the first flange part, a second curl surface provided on an end of the first curl surface and supported on an outer circumferential surface of the second flange, and a third curl surface provided on an end of the second curl surface and inserted between the cover part and the second flange.

7. The button-type secondary battery of claim 5 or 6, wherein the second flange has a thickness that gradually increases toward an end thereof.

8. The button-type secondary battery of claim 5 or 6, wherein the third curl surface has a thickness that gradually increases toward an end thereof.

9. The button-type secondary battery of claim 5 or 6, wherein an inner surface of the second flange facing the third curl surface is formed as a first inclined surface that gradually increases in thickness toward an end thereof, and
an outer surface of the third curl surface facing the second flange is formed as a second inclined surface that is in surface close contact with the first inclined surface.

10. The button-type secondary battery of claim 1 or 2, wherein a sealing member for increasing in sealing force is provided at a bonded portion between the flange part and the curl part.

11. The button-type secondary battery of claim 1 or 2, wherein the terminal member comprises a terminal part to which the second electrode tab of the electrode assembly is coupled while being inserted into a through-hole of the upper cap and a support part having a diameter greater than that of the through-hole of the cover surface and supported on a top surface of the cover cap.

12. The button-type secondary battery of claim 1 or 2, wherein an uneven part for increasing in coupling force between the accommodation part and the cover part is formed between the accommodation part and the cover part, and
the uneven part is formed on an outer circumferential surface of the cover part facing the accommodation part.

13. The button-type secondary battery of claim 1 or 2, wherein an insulating tape is attached to each of the first electrode tab and the second electrode tab.
